# EUROPEAN PATENT SPECIFICATION

(11) **EP 1 204 348 B1**
(45) Date of publication and mention of the grant of the patent: **18.05.2005**
(21) Application number: 01902526.1
(22) Date of filing: 31.01.2001
(51) Int. Cl.: A47J 27/21

(54) **CONTROLS FOR ELECTRIC LIQUID HEATING VESSELS**
KONTROLLVORRICHTUNG FÜR FLÜSSIGKEITEN BEI ELEKTRISCHEN HEIZGERÄTEN
COMMANDE DE RECIPIENTS ELECTRIQUES DE CHAUFFAGE DE LIQUIDES

(30) Priority: 31.01.2000 GB 0002203
(43) Date of publication of application: 15.05.2002
(73) Proprietor: STRIX LIMITED, Ronaldsway, Isle of Man IM9 2RG (GB)
(72) Inventor: Scott, Michael James, Port St. Mary Isle of Man IM9 5PH (GB); Fumagalli, Richard Brandon, Chester Cheshire CH3 5EB (GB)
(74) Representative: Piésold, Alexander J.
(86) International application number: PCT/GB2001/000404
(87) International publication number: WO 2001/056437

(56) References cited:
- WO-A-99/02080
- WO-A-99/48331
- GB-A- 2 202 376
- GB-A- 2 324 015
- GB-A- 2 339 335

## Description

The present invention relates to controls for electric liquid heating vessels and, more particularly, for liquid boiling vessels such as domestic kettles and hot water jugs.

The traditional kettle or hot water jug is equipped with a boiling control which, when liquid in the vessel boils, operates to disconnect the power supply to the heater of the vessel and so to discontinue boiling. Normally the boiling control comprises a thermally sensitive bimetallic actuator which is arranged in fluid communication with the interior of the vessel and which acts to open a set of switch content when exposed to a sufficient amount of steam.

More recently it has been proposed that as well as boiling water, kettles and hot water jugs might also keep water warm after it has boiled. To this end it has been proposed to provide two or more heating elements, one of which is used primarily to bring liquid in the vessel to a boil and the other which keeps it warm after it has boiled. A suitable switching mechanism is provided to effect switching between the elements. One such system is described in our International Patent Application No. WO 99/02080. A further mechanism is described in our International Patent Application No. WO 99/48333

The systems described in the above applications are rather complex, and the present invention seeks to provide a simplified system which will allow switching between heating elements and also the switching off of those respective elements.

From a first aspect, therefore, the invention provides a thermally sensitive control for a liquid heating vessel as claimed in claim 1. In a preferred embodiment the control is for a liquid boiling vessel wherein the first heating means is for boiling liquid in the vessel and the second heating means is for maintaining boiling or keeping liquid in the vessel warm after it has boiled, and wherein said thermally sensitive actuator is a boiling-sensitive actuator.

In this simple manner, the act of lifting the vessel from its support surface (e.g. a power base in the case of a cordless appliance) will act to switch off all heating in the vessel. Boiling can only be recommenced by replacing the vessel on its support and then manually switching the control member to its on position. If the vessel is merely replaced on its base, heating will not recommence. This is important since in many circumstances the vessel will be returned to its support surface empty, so any heater then energised would overheat.

Preferably, the control member is a trip lever. Such trip levers are widely used in thermally sensitive controls for liquid boiling vessels and typically comprise an over-centre spring mechanism which biases the trip lever between two stable positions. Most preferably the trip lever comprises two arms, one of which acts to open the first set of contacts in response to liquid in the vessel boiling and the second of which is associated with the second set of contacts.

The means operable to open the second set of contacts upon the vessel being lifted are preferably resiliently biased. In the preferred embodiments, such means comprises a spring which is released upon the vessel being lifted. Such a spring may be coupled to a member which extends from the vessel so as to be preloaded when the vessel is placed on the support surface and then released when it is lifted therefrom. Such an arrangement is known, for example from the U18 control.

In a first embodiment of the invention, the control comprises latch means which retains the second set of contacts open after the vessel has been lifted from its support surface. Preferably the latch means is subsequently released by the control member as it is moved to its "on" position so as to permit closure of the second set of contacts once again.

Preferably, the latch means comprises a latch member which is movable into its latching position when the vessel is lifted from its support surface body, e.g. by the abovementioned spring means, so as to open the second set of contacts.

Preferably the latch member is mounted for pivotal movement whereby the control member may unlatch the latch by pivoting the latch member.

In the preferred embodiment, the latch member is generally L-shaped, with a catch provided on one limb, and the control member acting on the other limb to pivot the catch away from its catch surface to release it.

To allow for adequate opening of the second set of contacts, the latch member is also preferably mounted for translational movement. To this end, the latch member may comprise a slot or the like for slidable engagement with a mounting location on the control unit.

In the embodiment described above, the control member effectively has two positions, i.e. an "on" in which the two sets of contacts are closed, and a "off" position in which the first set of contacts is open, but in which the second set of contacts may be open or closed, depending on whether the vessel has been lifted from its support surface. In a second embodiment of the invention, however, the control member is adapted to have three operative positions, a first in which the first heating means of the vessel is energised, a second position in which the second heating means is energised and a third position in which the power supply to both heating means is disconnected. The control member moves from the first to the second position in response to boiling of liquid within the vessel. Thus the vessel may change from say a "heating" mode to a "maintaining" mode upon operation of the boiling sensitive actuator. Means are provided for retaining the control member in that position until such time as the vessel is lifted from its support surface or some other action is taken in order to move the control member to its third position in which both heating means are turned off.

In a preferred embodiment, therefore, the invention provides a thermally sensitive control for a liquid boiling vessel, said control comprising: a boiling-sensitive actuator; a control member movable between a first control position in which a first heating means of the liquid boiling vessel is energised for heating liquid in the vessel to boiling, a second control position in which a second heating means is energised for keeping the heated water in the vessel warm or boiling and a third control position in which neither heating means is energised, said control member being moved from said first to said second control position in response to operation of said boiling sensitive actuator; and retaining means for retaining said control member in said second control position until some further action is taken to move said control member to said third control position.

As in the arrangement described above, the control member is preferably a trip lever which is movable between two stable positions. In this embodiment, the first stable position of the trip lever would correspond to the first control position and the second stable position to the third control position. In this arrangement, the retaining means would be arranged so as to permit the trip lever to move towards its second stable position but prevent it from moving fully to that position and retain it in the second control position.

Such control additionally comprises means for releasing the retaining means in order to permit the control member or trip lever to move into the third control position. Such release means are responsive to the vessel mounting the control being lifted from a support surface and to the operator manually moving the control member to its third position.

In the preferred embodiment, the retaining means comprise a detent provided on a support which can be deflected, most preferably pivoted, to release the retaining means.

The retaining means may be spring biased to assist in retention of the control member in the second position. The spring biasing force is preferably provided by a spring which is movable in response to the vessel being lifted so as to release the retaining means.

In either embodiment described above, the boiling sensitive actuator may be, for example, a steam sensitive actuator which is in fluid communication with the interior of the vessel. In another embodiment, however, it may be an actuator responsive to a temperature of a part of the vessel. In particular, the boiling-sensitive activator may be a bimetallic actuator mounted in thermal contact with a sump provided in the vessel base, through which boiling of liquid in the vessel can be sensed. The principles behind this type of control are described in our International Application No. WO 97/04964.

It will be appreciated that the invention also extends to a liquid heating vessel comprising heating means and a control in accordance with the invention. The invention is equally suited for use with vessels having either sheathed heating elements or thick film heating elements.

Thick film heating elements are now being used widely in liquid heating vessels and comprise one or more resistive heating tracks laid down on an insulating substrate. The applicant has designed a number of thermally sensitive controls for such heaters. One such commercially available control, the U2830 (described in WO 99/48331), has a steam sensitive bimetallic actuator mounted on a trip lever which acts to lift two contacts from terminals provided on the ends of the heating track. A similar trip lever mechanism could be employed in accordance with this invention, but with suitable retaining means to hold the trip lever in its second control position.

In certain embodiments, therefore, the heater may comprise a thick film heater with respective heater track sections for the main heating and temperature maintaining functions. Most simply, the two track sections could be connected electrically in parallel, with switches provided for each track section. However in another arrangement the temperature maintaining track section could be connected in series with the main heating track, the relative resistances of the track sections meaning that in such a connection very little heat will be generated by the main heating track section. The switching between the various conditions is preferably achieved by the control member lifting contacts as appropriate from the heater tracks.

Some preferred embodiments of the invention will now be described, by way of example only, with reference to the accompanying drawings in which:
Figure 1 shows a control embodying the invention mounted on a thick film heater;
Figure 2 shows the control of Figure 1, with certain components removed for purposes of clarity;
Figure 3 shows the operative components of the control of Figure 1;
Figure 4 shows the trip lever of the control;
Figure 5 shows the various stages of operation of the control;
Figure 6 shows schematically the electrical circuit for the heater;
Figure 7 shows a perspective view of a second embodiment of the invention;
Figures 8A to 8E show a section through the embodiment of Figure 7, in various stages of operation; and
Figures 9A to 9E show the associated electrical circuit in the stages of operation shown in Figures 8A to 7E.

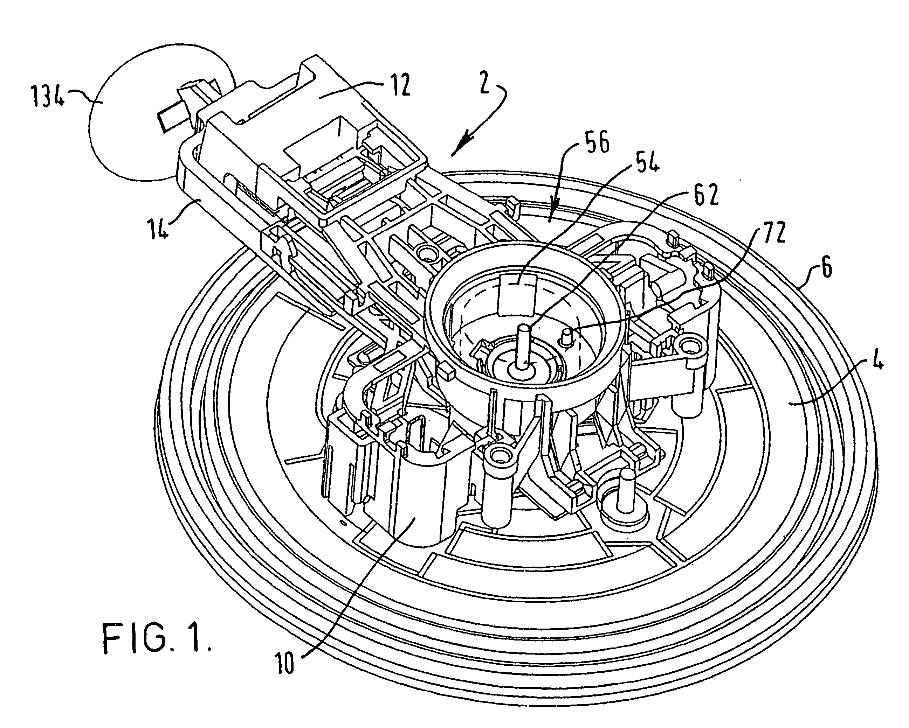

With reference to Figure 1, a first embodiment of control unit 2 embodying the invention is shown mounted to a thick film heater 4 provided on a metal plate 6 which is intended to be mounted in the base of a plastics walled vessel (not shown).

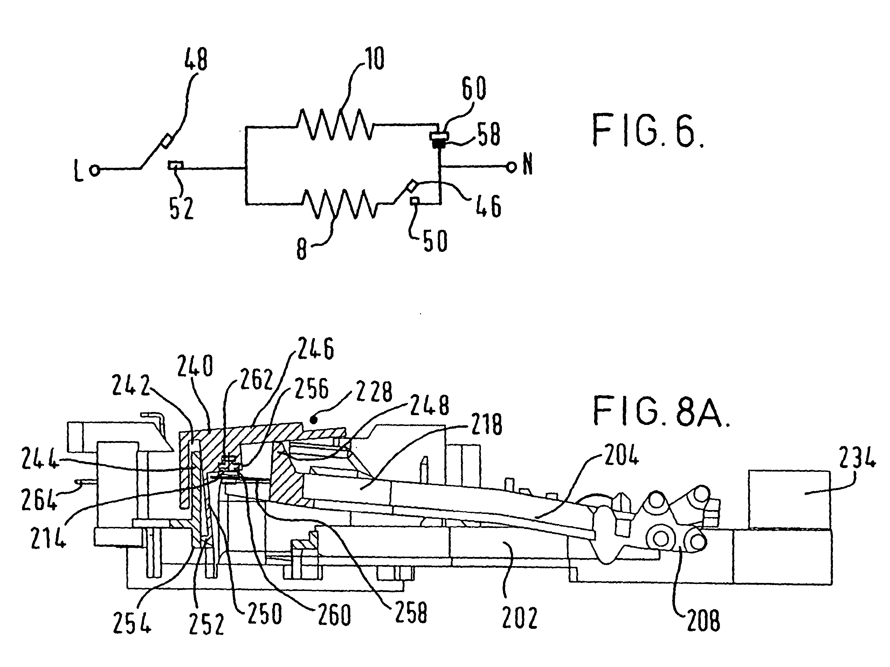

As can be seen in Figure 6, the thick film heater 4 comprises two heating tracks 8,10 connected electrically in parallel. The first track 8 is intended to heat liquid in the vessel to boiling and is typically rated at say 3kW. The second track 10 is much lower power for keeping liquid in the vessel warm after it has boiled. This "keep warm" or "maintaining" track is typically rated at between 40 and 80 W, depending on the thermal insulation of the vessel. Preferably the "maintaining" track has a relatively high watts density so that it causes localised boiling of the liquid in the vessel, giving a visual indication (eg a stream of bubbles rising through the vessel) or an audible indication (the sound of the boiling) that the liquid is being kept at the desired temperature.

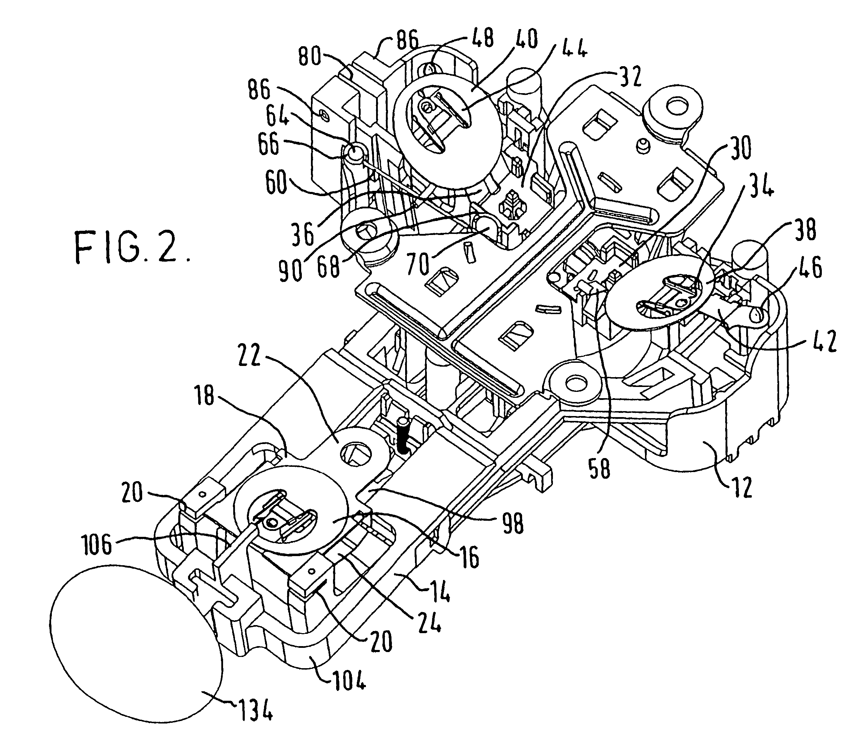

The control unit 2 comprises a main moulding 12 and a trip lever moulding 14. The main moulding 12 is shown in greater detail in Figure 2.

As can be seen from Figure 2, the main moulding 12 mounts a number of components, some of which have been omitted for purposes of clarity. In particular the moulding 14 mounts a thermally sensitive snap-action bimetallic actuator 16 at one end thereof. The actuator 16, which is of the general type described in GB1542252 is mounted on, and in good thermal contact with, a copper plate 18 which snaps into slots 20 in the end of the moulding 14. The free end 22 of the plate 18 is intended, in use, to contact a sump provided in the heater plate 6, for the purpose of detecting boiling of liquid within the vessel in accordance with the process described in our International Patent Application No. WO 97/04694. The plate 18 is biased resiliently upwardly in the sense of Figure 2 by a spring 24, so as to retain good thermal contact with the sump in use.

The moulding 12 also acts to mount a pair of actuator / contact carriers 30,32. Both these members are generally U-shaped having a first arm 34,36, which mount respective snap-action bimetallic actuators 38, 40 and a second arm 42,44 mounting respective movable contacts 46,48. Carriers of this type are described in more detail in our International patent application No. WO99/48331, to which further reference may be made as necessary.

The contacts 46, 48 make electrical contact with corresponding contacts 50,52 provided on the heating tracks 8, 10 as shown schematically in Figure 6. The carrier 30 is connected to the annular neutral terminal 54 of an electrical connector 56 provided in the moulding 14. The carrier 30 also has a tab-like fixed sprung contact 58 which makes a permanent sprung electrical connection to a further terminal 60 of the first heater track 8. The carrier 32 is connected to the line pin 62 of the connector 54. Accordingly, when the contact pairs 46;50, 48;52 are closed, both heating tracks 8, 10 will be energised. When contact 46 is lifted, the first track 8 will be de-energised. When contact 48 is lifted, both tracks 8, 10 will be de-energised.

The moulding 12 also mounts a wire spring 60. The wire spring is retained at one end 64 in a bore 66 and extends across the control through a slot 68 in a bore 70. The bore 70 mounts a pin 72 which extends from the base of the cordless connector 54 as shown in Figure 1. The arrangement is such that when the vessel is placed on a cordless base, the pin 72 is pushed upwardly in the bore 70 against the action of the spring 60. The purpose of this will be described further below.

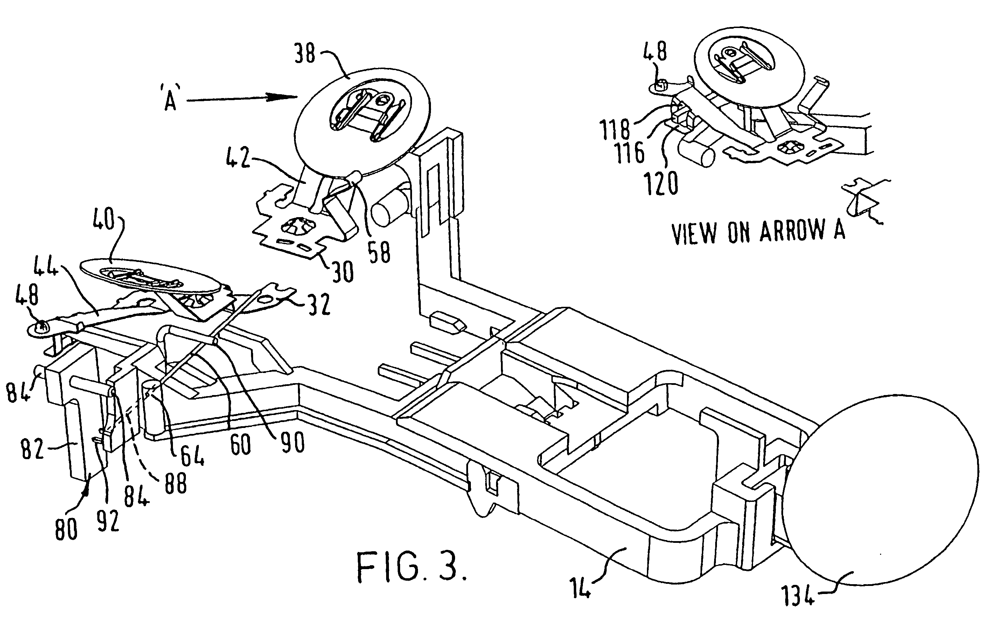

Adjacent the bore 66 there is mounted a generally L-shaped crank arm 80. The crank arm 80 comprises a moulding 82 having a rotary shaft 84 retained in journals 86 in the moulding 12. A wire arm 88 which extends out from the lower end of the crank arm moulding 82. As can best be seen from Figure 3, the wire arm 88 is bent at its free end 90 so that it lies over the wire spring 60. The crank arm moulding 82 is also provided with an axially projecting pin 92 whose purpose will be described further below.

The other main component of the control is the trip lever 14. The trip lever 14 is an over-centre trip lever which is spring loaded by a C-spring 98 located between respective knife edge grooves provided on the moulding 12 and the trip lever 14.

At one end 104 the trip lever 12 is provided with a lug 106 which projects over a peripheral portion 108 of the bimetallic actuator 16 mounted on the main control moulding 12. The other end 110 of the trip lever 12 is provided with two arms 112,114. The first arm 112 has a projection 116 which projects through an opening 118 formed in a downwardly depending L-shaped flange 120 of the contact carrying arm 38 of the carrier 30. Similarly, the other arm 114 has a projection 122 which, in use, projects through an opening 124 provided in a downwardly depending L-shaped flange of the contact carrying arm 44 of the second member 32. The flange 126 on the arm 44 is deeper than the flange 120 on the arm 38, for purposes which will be described further below.

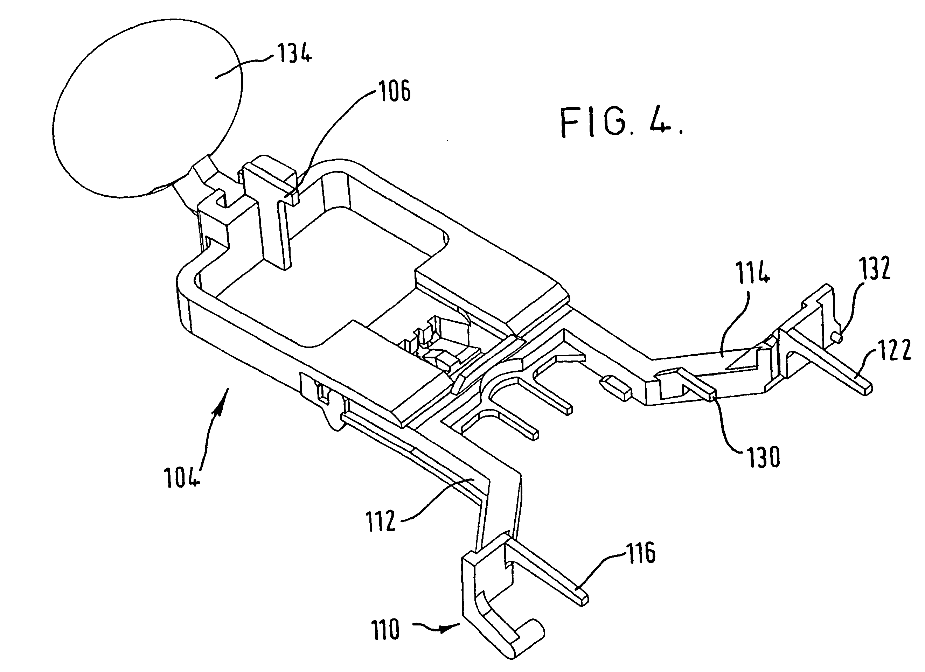

The arm 114 of the trip lever 12 is also provided with a projection 130, which as can best be seen from Figure 4 underlies the wire spring 60.

Finally, and significantly, the arm 114 also includes an axially projecting pin 132 which in use can engage with the axially extending pin 92 provided on the crank member 80.

A control knob 134 is mounted in a slot 136 provided on the end 104 of the trip lever 12.

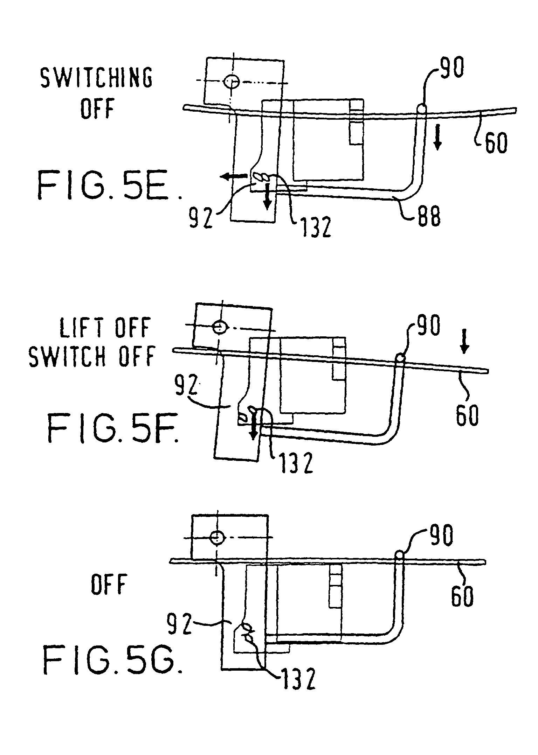

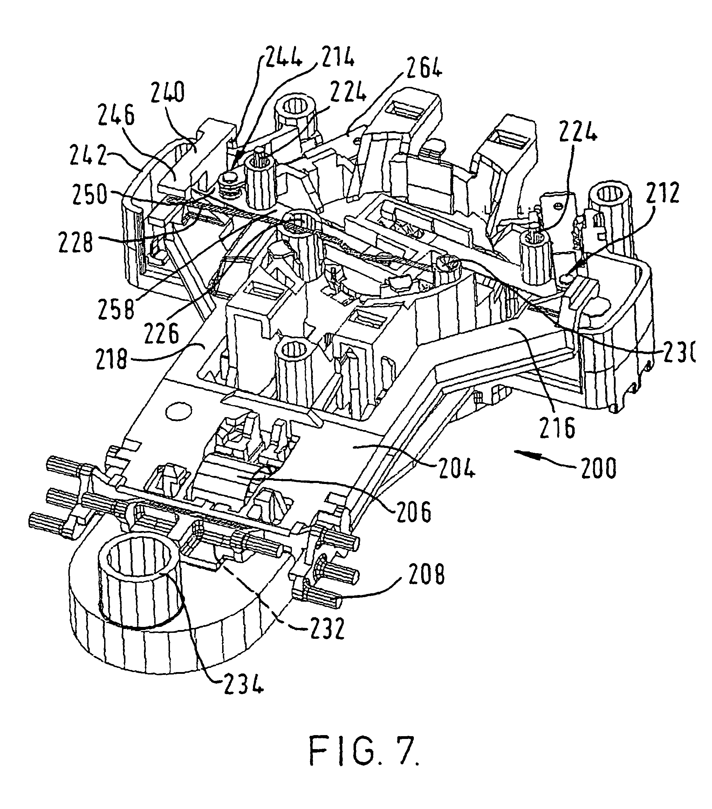

Operation of the above control will now be described with reference to Figures 5A to 5G.

Assuming that the control unit 2 has been mounted to the heater 4, the vessel is on its cordless base and the control knob 134 is in the "off" position, both contacts 46 and 48 will be lifted from their respective heater track contacts 50, 52, and the trip lever 14 will be in its "off" position (the knob 134 will be raised in the sense of Figure 2). In this condition, the pin 132 provided on the trip lever lies under the corresponding pin 92 on the crank arm moulding 82, as shown in Figure 5A.

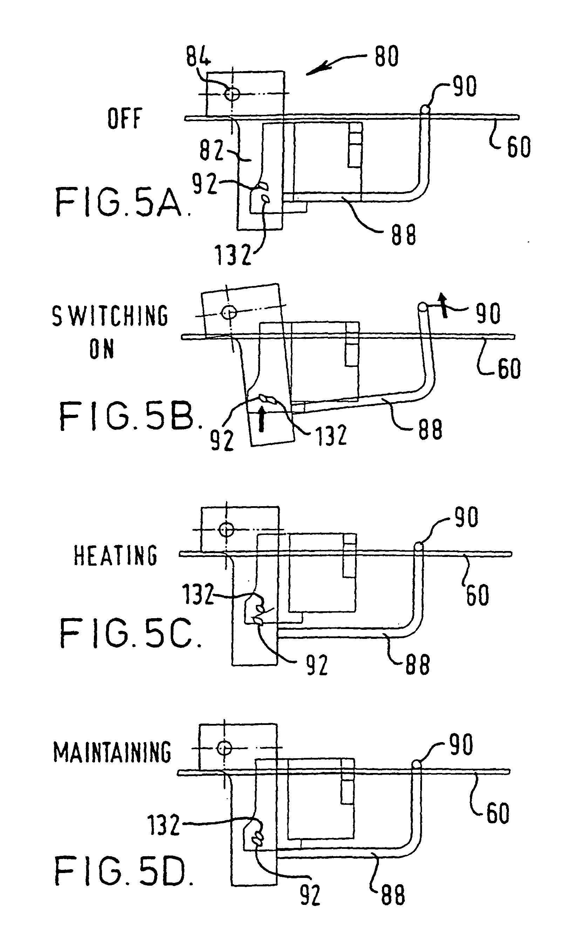

The vessel can be switched on by pushing the knob of the trip lever 14 downwardly in the sense of Figure 2. As the trip lever 14 moves, the trip lever pin 132 engages the pin 92 on the crank arm 80 so as to pivot the crank arm as shown in Figure 5B. This allows the pin 132 to move past the pin 92 and so allows the trip lever to assume its "on" position. This condition is shown in Figure 5C. The pins 132, 92 are shaped so as to facilitate the movement of pin 132 past the pin 92. In the "on" position, both the control contacts 46,48 make with their respective heater track contacts 50, 52 such that both heater tracks 8, 10 are energised so as to heat liquid in the vessel. The heating comes primarily from the main heating track 8.

When liquid in the vessel boils, liquid in the sump in the heater plate will be displaced causing the temperature of the sump to rise rapidly, this temperature rise being sensed through the copper plate 22 by the bimetallic actuator 16. When the actuator 16 reaches a predetermined temperature, it will reverse its curvature with a snap-action, lifting its peripheral portion 108 which then engages and lifts the lug 106 of the trip lever 14 upwardly in the sense of Figure 2. This movement is sufficient to cause the trip lever 14 to go over-centre with respect to its knife edge mountings which means that the arms 112,114 of the trip lever will move downwardly in the sense of Figure 2.

The movement of the trip lever 14 is, however, stopped at an intermediate position in which the trip lever 132 pin comes into engagement with, and is retained by, the crank arm pin 92, as shown in Figure 5D. The pin 132 is held due to the shape of the engaging surfaces of the pins 132, 92 and also due to the wire spring 60 with which the free end 90 of the crank arm 80 engages. The resilience of the wire spring 60 acting on the crank arm 80 provides a force counter to the force tending to push the pin 132 past the pin 92 and rotate the crank arm 80.

In this intermediate control position the projection 116 of the arm 112 of the trip lever 12 moves sufficiently to engage the flange 120 of the contact carrying arm 42 of the carrier 30 and so lift the contact 46 out of contact with its corresponding contact 50 on the heater. By this action, the main heating track 8 is de-energised, leaving only the temperature maintaining track 10 energised.

The control will remain in this condition until some further action occurs.

Firstly, should a user wish to switch the vessel off, the control knob 134 can be pushed towards its "off" position. As shown in Figure 5E, the force imparted to the crank arm 80 through the pins 132, 92 is sufficient to overcome the resilience of the wire spring 60, allowing the crank arm 80 to pivot to the extent that the trip lever pin 132 can move past the crank arm pin 92. Once this happens, the trip lever 14 will be able to move to its stable "off" position under its own spring force.

In this condition, the projection 122 of the arm 114 of the trip lever 14 picks up the flange 126 of the contact carrying arm 44 of the carrier member 32 so as to lift the contact 48 from the track contact 52, thereby de-energising the temperature maintaining heater track 10 as well, so that the power to both heater tracks is disconnected.

Similarly, should the user lift the vessel from its cordless base, the pin 72 will move downwardly in the sense of Figure 2 under the force of the wire spring 60. This allows the crank arm 80 to pivot freely under the force of the trip lever pin 132 acting on the crank arm pin 92 and so cause disengagement of the respective pins, as in the case described above, so that the trip lever 14 can then move to its "off" position, and so lift the contact 48.

Should the user lift the vessel from its base whilst the main heating track is still energised, the wire spring 60 will be released and move into contact with the trip lever lug 130 so as to trip the trip lever to its "off" position and disconnect the power to both heater tracks.

The heater may then be re-energised. If the vessel is placed back on its cordless base relatively quickly, then the bimetallic actuator 16 may not have sufficient time to reset. This means that the trip lever 14 will be unable to move back into its fully 'on' since it cannot go 'over centre'. Accordingly the control will be held in its intermediate condition. However, should the vessel be removed from its base for some time, or be filled with cold water, then the actuator 16 will reset and the action of placing the appliance back on its base and switching the knob to an "on" position will cause the trip lever to resume its fully "on" condition in which the liquid in the vessel will be boiled once more, as shown in Figure 5A. The action of the trip lever lug 106 acting against the actuator 16 in its operated configuration will assist in returning the actuator 16 to its original configuration.

As stated above, the control 2 embodies overheat protection in the form of bimetallic actuators 38,40 mounted on the members 30 and 32. Should the heater overheat, for example because no liquid has been placed in the vessel, or because liquid in the vessel evaporates away (which is unlikely since in the "maintaining" mode the steam produced will condense in the vessel), then one or both of the actuators will operate to lift the corresponding contact 46, 48 from the corresponding heater contacts. The actuators 38, 40 will engage the contact carrying arms 42,44 to lift the respective contacts 46,48. The arrangement is such that the respective contact carrying arms 42,44 will pick up the trip lever arm projections 116,122 and trip the trip lever 14 to its intermediate position and thus de-energise the main heating track 8 will be de-energised, leaving only the low power keep warm element energised. This has such a low power that it is unlikely to cause overheating of the vessel. Should the actuators 38,40 reset, the trip lever 14 will remain in its intermediate position so that the keep warm track 10 will remain energised and will only be de-energised when the vessel is switched off or lifted.

With reference now to Figures 7 to 9, a second embodiment of the present invention will now be described.

The control unit 200 of this embodiment is based closely upon the Applicant's U18 control, and as with the earlier embodiment is for use on cordless appliances. Such controls are well-known in the art, and their general principle of operation is described in our International Patent Application No. WO95/34187.

Briefly, however, the control unit 200 comprises a main moulding 202 and a trip lever 204, pivotally mounted thereon. The trip lever is moveable between two stable positions, its "on" position and its "off" position with a snap action caused by a C-spring 206 extending between the main moulding 202 and the trip lever 204. A control knob (not shown) is coupled to the end 208 of the trip lever 204 and projects externally of the appliance for manipulation by a user.

The main moulding 202 also mounts various other components of the control. In particular, it mounts components of a cordless electrical connector 210, and two sets of switch contacts 212, 214 arranged in the respective line and neutral sides of the electrical supply to the heaters of the vessel through the control.

The trip lever 204 has two arms 216, 218, each associated with a respective set of contacts 212, 214.

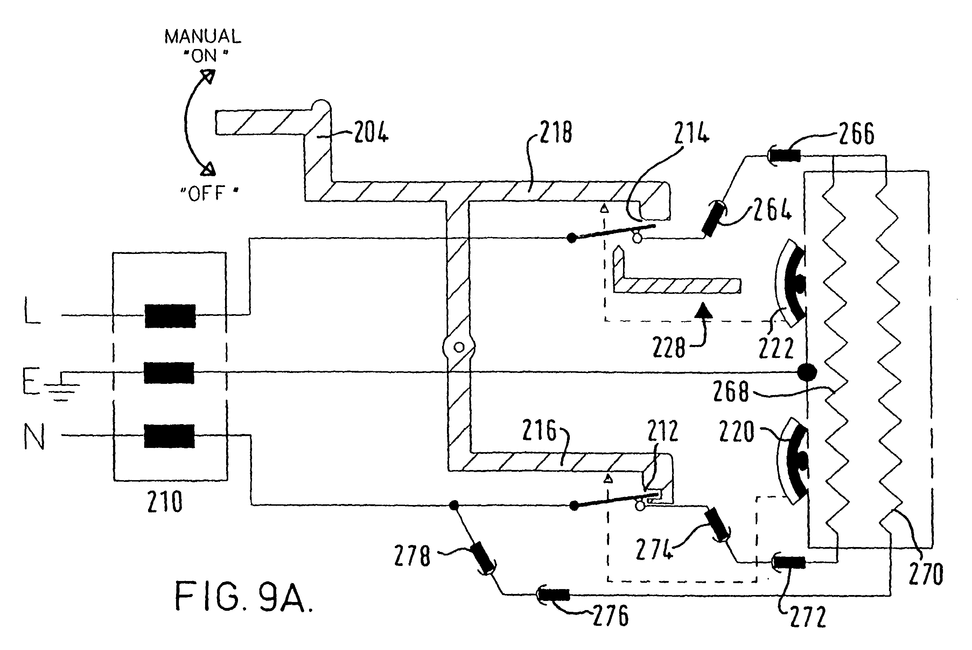

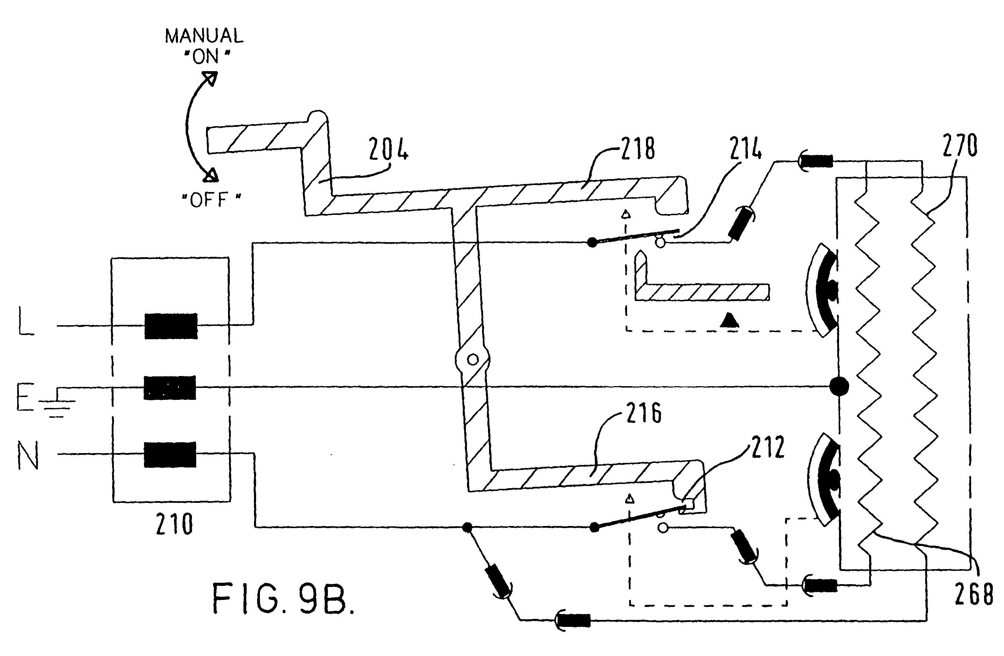

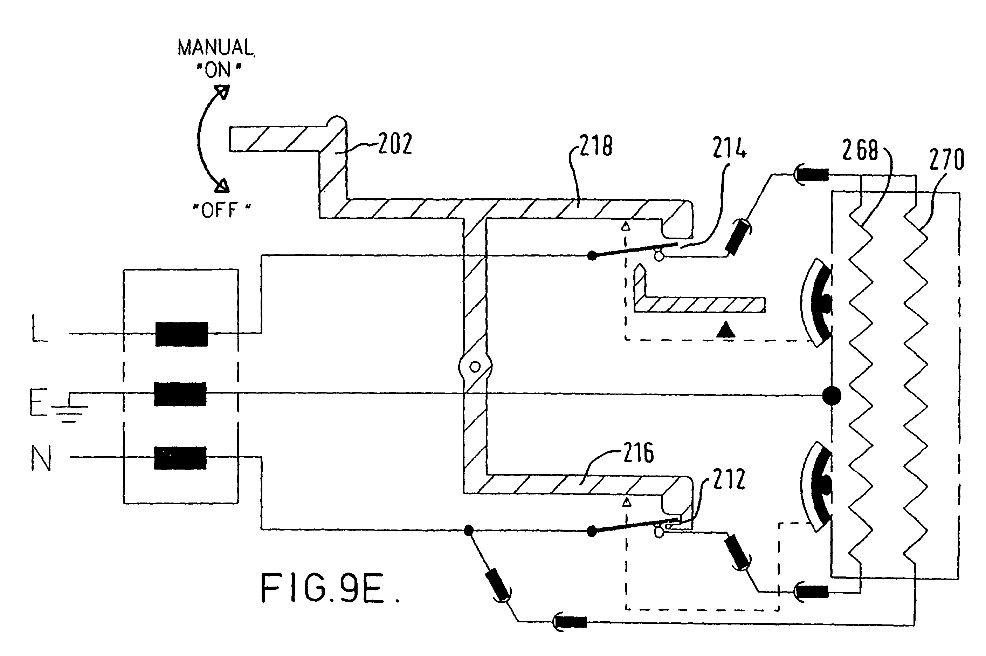

The moulding 202 also mounts a plate (not shown) which mounts two bimetallic actuators 220, 222 (shown schematically in Figure 9A) which are arranged in good thermal contact with the base of the heating vessel and which act by respective push rods 224 to open the respective sets of contacts 212, 214 should the vessel heaters overheat, e.g. in the event that the vessel boils dry.

A push rod 226 extends through the base of the electrical connector 210 such that when the heating vessel is placed on its power base, the push rod 224 is pushed upwardly. A wire spring 228 which is mounted fixedly in the moulding 202 at one end 230 is deflected upwardly and stressed by the push rod as it moves upwardly. The deflected, stressed position of the spring 228 is shown in Figure 8A.

The moulding 202 also houses a bimetallic actuator 232 which is in fluid communication with the interior of the vessel via a chimney 234 provided on the moulding 202 and a steam pipe (not shown) which extends from that chimney 234 to an upper region of the vessel. The bimetallic actuator 232 is arranged under the end 208 of the trip lever 204 such that when it operates, it moves that end 208 upwardly, thereby tripping the lever 204 to its "off" position.

The above features are typical of a standard U18 control. However, the embodiment of the invention described differs from the standard U18 control in a number of significant respects.

The most significance difference is the means for controlling the opening of the second set of contacts 214 in such a way as to allow the control to be used to control two heating means in a vessel. In this regard, the control comprises a latch member 240 which is made of plastics and which is generally L-shaped. The latch member 240 comprises a slot 242 which engages over a wall 244 provided on the main control moulding 202. One limb 246 is arranged to lie under the spring 228 and over the free end 248 of the arm 218 of the trip lever 204.

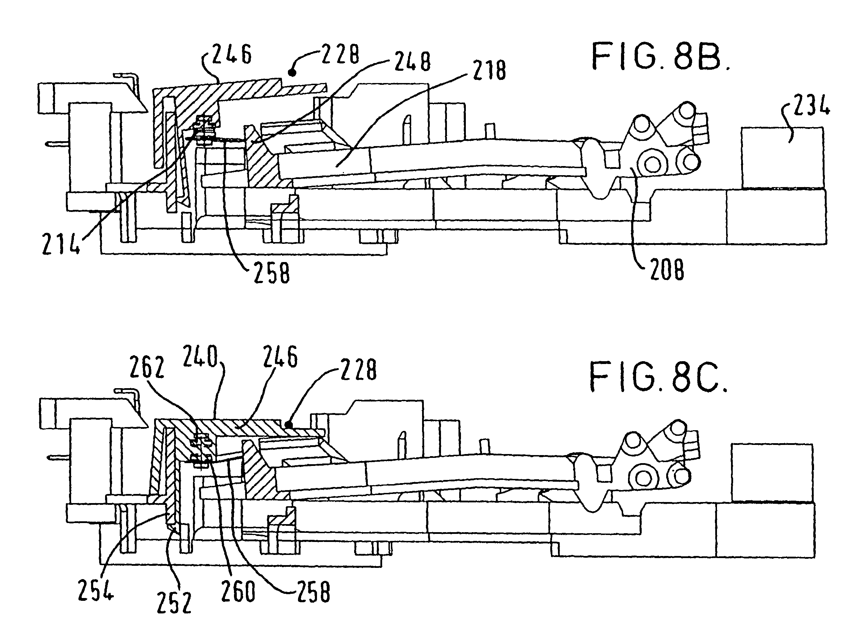

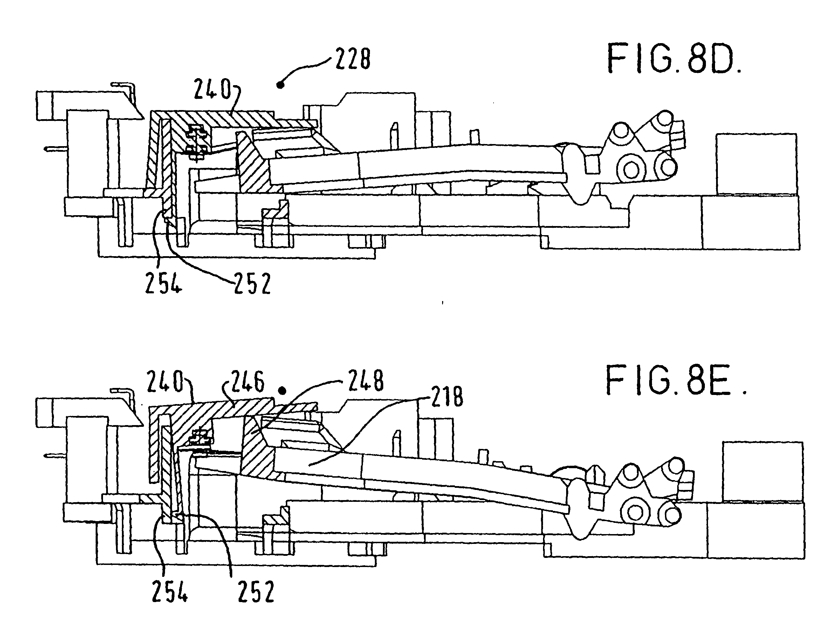

The other limb 250 of the latch member 240 is provided with a hook-like catch 252 at its free end which engages over the lower edge 254 of the moulding wall 244. The mid region 256 of the latch member 240 between the limbs 246, 250 is arranged to overlie a portion of a leaf spring 258 which mounts one contact 260 of the contact pair 214. The other contact 262 of that contact pair 214 is fixedly mounted and coupled to a tab 264 which is suitably connected to a common terminal 266 of a main heating element 268 and a keep warm heating element 270 of the vessel (see Figure 8) These heaters may be rated similarly to those described in the earlier embodiment and may be thick film or sheathed heating elements.

It will be seen from Fig. 8 that the slot 242 in the latch member 240 is sized such that it can move up and down the wall 244 and also such that there is a degree of lateral play such that the latch member 240 may pivot somewhat. The catch 252 is somewhat curved away from the slot 242 to facilitate this.

As can be seen schematically in Figure 9A, the other end of the main heating element 268 is connected to a tab 272 which is suitably connected to a tab 274 provided on the control unit 200. The tab 274 is connected to the neutral side of the electrical supply via the first set of switch contacts 212.

The second end of the keep warm heating element 270 is attached to a tab 276 which is connected to a further tab 278 provided on the control unit which is provided upstream of the set of switch contacts 212.

Operation of this embodiment will now be described with reference to Figures 8A to E and Figures 9A to E.

In the condition shown in Figures 8A and 9A, the heating vessel has been placed on its power base and the trip lever 204 moved manually by a user to its "on" position. In this situation, both sets of switch contacts 212 and 214 are closed, meaning that electrical power will be supplied both to the main heating element 268 and the keep warm heating element 270. Accordingly, water in the vessel will be heated by both elements, thereby resulting in relatively quick boiling of the liquid in the vessel.

When water in the vessel boils, steam is conducted via the steam pipe and steam chimney 234 to the bimetallic actuator 232. This will then operate in order to trip the trip lever 204 from its "on" position as shown in Figure 8A to its "off" position as shown in Figure 8B. In this condition, the first arm 216 of the trip lever 204 moves down to open the first set of contacts 212 thereby disconnecting the power supply to the main heating element 268. However, the second arm 218 of the trip lever 204 does not act directly on the second set of switch contacts 214 which means that they remain closed, as shown in Figure 8B. The latch member 240 rests on top of the leaf spring 258 but is not sufficiently heavy to cause the contacts 214 to open.

In this condition, therefore, liquid in the vessel is kept warm by the keep warm heating element 270. This heating will continue until such time as the vessel is lifted from its power base, as will be described below.

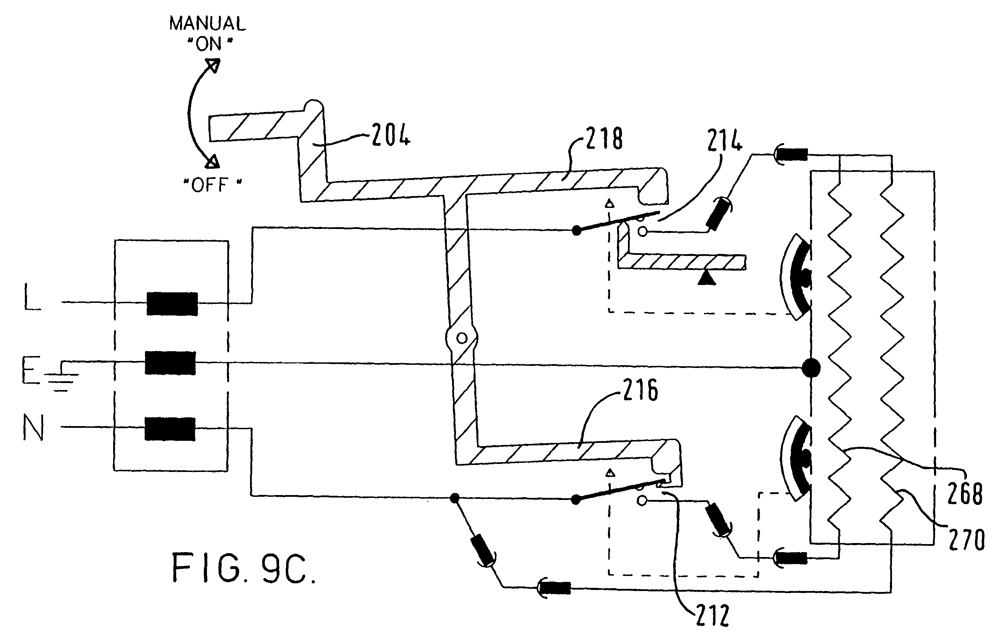

With reference to Figures 8C and 9C, when the vessel is lifted off its power base, the spring 228 moves downwardly in the sense of the figures so as to engage the limb 246 of the latch member 240. This causes the latch member 240 to move downwardly, being guided by the engagement of its slot 242 over the moulding wall 244. The latch member 240 moves down to a position in which the catch 252 at the end of limb 250 engages over the lower lip 254 of the wall 244 so as to latch the latch member 240 in that position. In this position, it will be seen that the mid region 256 of the latch 240 has deflected downwardly the contact 242 so as to open the set of contacts 214. In this condition, therefore, as seen in Figure 8C, the power to both heating elements 268, 270 is disconnected.

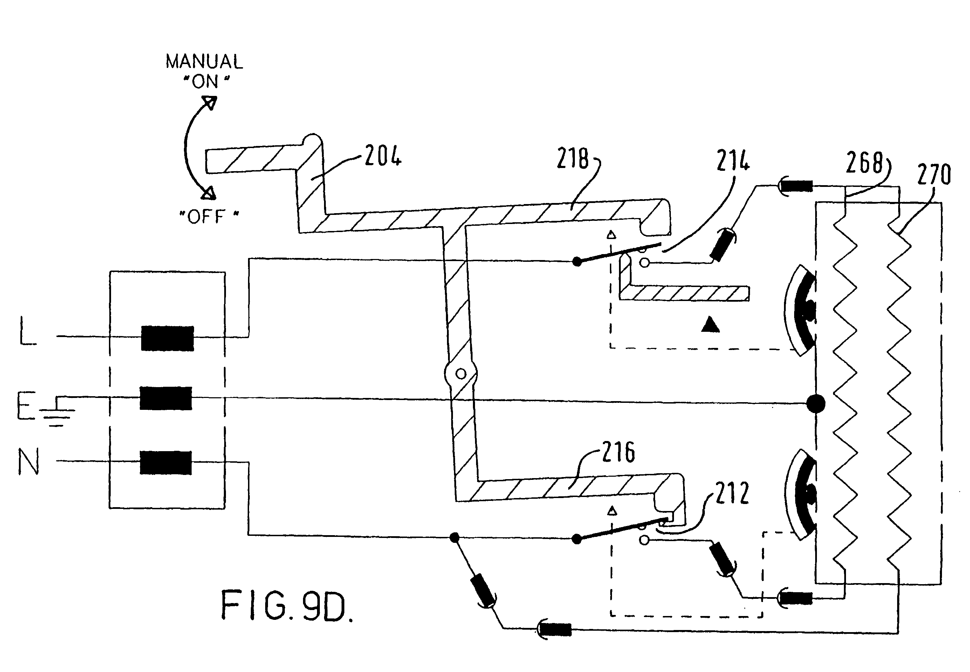

After the user has finished dispensing heated liquid or refilling the vessel, the vessel can be replaced upon its power base, as shown in Figures 8D and 9D. In this situation, the trip lever 204 is still maintained in its "off" position, but the spring 228 has been deflected upwardly from the upper limb 246 of the latch member 240, as shown. However, the contacts 214 remain open because the catch 252 remains engaged with its catch surface 254. As the trip lever 204 is still in its "off" position, the first set of contacts 212 will also remain open whereby power is still not supplied to the heating elements.

In order to recommence heating of liquid in the vessel, a user must then depress the trip lever 204, as shown in Figure 8E. This causes the trip lever 204 to move to its "on" position, as shown. In this condition, the free end 248 of the lever arm 218 moves into contact with the lower surface of the upper limb 246 of the latch member 240. This first causes the latch member 240 to pivot in such a way as to release the catch 252 from its catch surface 254, thereby disabling the latch, and then moves the latch member 240 upwardly so as to allow the set of contacts 214 to reclose. At the same time, the other arm 216 of the trip lever 204 moves so as to permit closure of the other set of contacts 212 whereby power is then supplied to both elements, to recommence boiling.

It will be understood that if the vessel is lifted from its base at any time during its operation, both heating elements will be disconnected. If both elements are energised before the vessel is lifted then the spring 22 will move down to move the latch member 240 to its latched position. In so moving the latch member will push down on the end 248 of the trip arm 218 to cause it to move with a snap action to its "off" position in which it will open the contacts 212.

It will be appreciated that various modifications can be made to the embodiments of the invention described above without departing from the scope of the invention. For example, the electrical tracks on the heater could be connected electrically in a different configuration, for example in series, with suitable contact positions on the tracks. Also, if it was desired only to heat the liquid in the vessel to a temperature below boiling, the actuator could be will re-close upon cooling of the actuator, leading to cycling of the keep warm element 270. This is not likely to be dangerous since it is of relatively low power.

It will be appreciated that various modifications can be made to the embodiments of the invention described above without departing from the scope of the invention as defined by the appended claims. For example, the electrical tracks on the heater could be connected electrically in a different configuration, for example in series, with suitable contact positions on the tracks. Also, if it was desired only to heat the liquid in the vessel to a temperature below boiling, the actuator could be suitably positioned to sense such a temperature instead of boiling. The term boiling as used herein should be suitably construed to embrace this possibility.

In addition, although the actuator is shown mounted to the moulding, it could instead be mounted to the vessel, so long as its operation trips the trip lever. Also the overheat protection actuators may be arranged such that their operation does not trip the trip lever but still sufficient to lift their respective contacts.

## Claims

1. A thermally sensitive control for a liquid heating vessel having first heating means for heating liquid in the vessel and second heating means for keeping liquid in the vessel warm after it has been heated, said control comprising: a temperature-sensitive sensor or actuator(16; 232); means responsive to said actuator or sensor(14; 204) to open a first set of contacts(46; 212) to switch heating from said first heating means to said second heating means; and **characterised in that** said control further comprises means(60; 228) operable upon the vessel being lifted from a support surface to open a second set of contacts(48; 214) so as to switch off both heating means, said respective sets of contacts(46,48; 212,214) only being recloseable thereafter by replacing the vessel upon its support surface and manually resetting the control to its "on" condition.

2. A thermally sensitive control as claimed in claim 1, wherein said sensor or actuator is a temperature-sensitive actuator(232); and said means responsive to said actuator comprises a manually operable control member(204) movable from an "on" position in response to operation of said actuator(232) to open said first set of contacts(212).

3. A thermally sensitive control as claimed in claim 2, wherein said manually operable control member is a trip lever (204) ; and said means operable upon the vessel being lifted from a support surface is a spring means(228); said control further comprising latch means(240) for maintaining said second set of contacts (214) open after said vessel is replaced upon its support surface; said trip lever (204) being configured to release the latch(240) to allow said second set of contacts (214) to close when it is manually returned to its "on" position.

4. A thermally sensitive control as claimed in claim 2 or 3 for a liquid boiling vessel wherein: said first heating means is for boiling liquid in the vessel; said second heating means is for maintaining boiling or keeping liquid in the vessel warm after it has boiled; and wherein said thermally-sensitive actuator is a boiling-sensitive actuator(232).

5. A thermally sensitive control as claimed in claim 4 wherein said control member is a trip lever (204).

6. A thermally sensitive control as claimed in claim 5 wherein said trip lever (204) comprises two arms (216,218), one of which acts to open the first set of contacts(212) in response to liquid in the vessel boiling and the second of which is associated with the second set of contacts(214).

7. A thermally sensitive control as claimed in any preceding claim wherein said means operable(228) to open the second set of contacts(214) upon the vessel being lifted are resiliently biased.

8. A thermally sensitive control as claimed in claim 7 wherein said means comprises a spring(228) which is released upon the vessel being lifted.

9. A thermally sensitive control as claimed in claim 8 wherein said spring(228) is coupled to a member (224) which extends from the vessel so as to be reloaded when the vessel is placed on the support surface and then released when it is lifted therefrom.

10. A thermally sensitive control as claimed in any preceding claim wherein the control comprises latch means(240) which retains the second set of contacts(214) open after the vessel has been lifted from its support surface.

11. A thermally sensitive control as claimed in claim 10 wherein said latch means(240) is released by the control member(204) as it is moved back to its "on" position, so as to permit re-closure of the second set of contacts(214).

12. A thermally sensitive control as claimed in claim 11 wherein said latch means comprises a latch member(240) which is moved into its latching position when the vessel is lifted from its support surface body.

13. A thermally sensitive control as claimed in claim 12 as dependent directly or indirectly upon claim 8 or 9 wherein said latch(240) is so moved by said spring means(228).

14. A thermally sensitive control as claimed in claim 12 or 13 wherein the latch member(240) is mounted for pivotal movement for delatching.

15. A thermally sensitive control as claimed in claim 14 wherein the latch member(240) is generally L-shaped, with a catch(252) provided on one limb, and the release member acting on the other limb to pivot the catch away from its catch surface to release it.

16. A thermally sensitive control as claimed in claim 14 or 15 wherein the latch member(240) is also mounted for translational movement.

17. A thermally sensitive control as claimed in claim 16 wherein the latch member(240) comprises a slot(242) for slidable engagement with a mounting location(244) on the control.

18. A thermally sensitive control as claimed in claim 4 or 5 wherein said control member(204) is movable between a first control position in which said first heating means is energised, a second control position in which said second heating means is energised and a third control position in which neither heating means is energised, said control member(204) being moved from said first to said second control position in response to operation of said boiling sensitive actuator (232); and wherein retaining means(258) are provided for retaining said control member(204) in said second control position until some further action is taken to move said control member(204) to said third position.

19. A thermally sensitive control as claimed in claim 18 wherein the lifting of the vessel releases the retaining means in order to permit the control member(204) to move into the third control position.

20. A thermally sensitive control as claimed in claim 19 wherein the retaining means comprises a detent provided on a support which can be deflected, more particularly pivoted, to release the retaining means.

21. A thermally sensitive control as claimed in any of claims 18 to 20 wherein the retaining means is spring biased to assist in retention of the control member(204) in the second position.

22. A thermally sensitive control as claimed in claim 21 wherein the spring biasing force is provided by a spring which is movable in response to the vessel being lifted so as to release the retaining means.

23. A thermally sensitive control as claimed in any of claims 18 to 22 wherein the retaining means is configured and arranged so that it is capable of being released manually by a user moving the control member(204) to the third position.

24. A thermally sensitive control as claimed in any preceding claim wherein the boiling sensitive actuator(232) is a bimetallic actuator responsive to a temperature of a part of the vessel, preferably a sump of the vessel.

25. A thermally sensitive control as claimed in any of claims 1 to 23 wherein the boiling sensitive actuator(232) is a steam-sensitive bimetallic actuator.

26. A liquid heating vessel comprising a heater and a control as claimed in any preceding claim.

27. A liquid heating vessel as claimed in claim 26 wherein said heater is a thick film heater.

## Patentansprüche

1. Thermisch sensitive Steuer/Regeleinrichtung für ein Flüssigkeits-Heizgefäß mit einem ersten Heizmittel zum Erhitzen von Flüssigkeit in dem Gefäß und einem zweiten Heizmittel zum Warmhalten von Flüssigkeit in dem Gefäß, nachdem sie erhitzt wurde, wobei die Steuer/Regeleinrichtung umfasst: einen temperatur-sensitiven Sensor oder Aktuator (16; 232); ein Mittel, welches auf den Aktuator oder den Sensor (14; 204) anspricht, um einen ersten Satz von Kontakten (46; 212) zu öffnen, um eine Beheizung von den ersten Heizmitteln zu den zweiten Heizmitteln zu schalten; und **dadurch gekennzeichnet, dass** die Steuer/Regeleinrichtung weiterhin ein Mittel (60; 228) umfasst, welches auf ein Anheben des Gefäßes von einer Trägerfläche hin betätigbar ist, um einen zweiten Satz von Kontakten (48; 214) zu öffnen, sodass beide Heizmittel auggschaltet werden, wobei die jeweiligen Sätze von Kontakten (46, 48; 212, 214) danach nur erneut schließbar sind, indem das Gefäß auf seine Trägerfläche zurückgestellt und die Steuer/Regeleinrichtung manuell auf ihren "Ein"-Zustand zurückgesetzt wird.

2. Thermisch sensitive Steuer/Regeleinrichtung nach Anspruch 1, wobei der Sensor oder Aktuator ein temperatur-sensitiver Aktuator (232) ist; und das auf den Aktuator ansprechende Mittel ein manuell betätigbares Steuer/Regelelement (204) umfasst, welches von einer "Ein"-Position im Ansprechen auf eine Betätigung des Aktuators (232) beweglich ist, um den ersten Satz von Kontakten (212) zu öffnen.

3. Thermisch sensitive Steuer/Regeleinrichtung nach Anspruch 2, wobei das manuell betätigbare Steuer/Regelelement ein Schalthebel (204) ist; und wobei das auf ein Anheben des Gefäßes von einer Trägerfläche hin betätigbare Mittel ein Federmittel (228) ist; wobei die Steuer/Regeleinrichtung weiterhin ein Klinkenmittel (240) umfasst, um den zweiten Satz von Kontakten (214) offenzuhalten, nachdem das Gefäß auf seine Trägerfläche zurückgestellt wurde; wobei der Schalthebel (204) derart konfiguriert ist, dass er die Klinke (240) löst, um zu ermöglichen, dass der zweite Satz von Kontakten (214) schließt, wenn er manuell auf seine "Ein"-Position zurückgestellt wird.

4. Thermisch sensitive Steuer/Regeleinrichtung nach Anspruch 2 oder 3 für ein Flüssigkeits-Kochgefäß, wobei: das erste Heizmittel für das Kochen von Flüssigkeit in dem Gefäß vorgesehen ist; das zweite Heizmittel vorgesehen ist, um Flüssigkeit in dem Gefäß am Kochen oder warm zu halten von, nachdem sie gekocht hat; und wobei der thermisch sensitive Aktuator ein koch-sensitiver Aktuator (232) ist.

5. Thermisch sensitive Steuer/Regeleinrichtung nach Anspruch 4, wobei das Steuer/Regelelement ein Schalthebel (204) ist.

6. Thermisch sensitive Steuer/Regeleinrichtung nach Anspruch 5, wobei der Schalthebel (204) zwei Arme (216, 218) umfasst, von welchen einer derart funktiobiert, dass er den ersten Satz von Kontakten (212) im Ansprechen auf ein Kochen der Flüssigkeit in dem Gefäß öffnet und von welchen der zweite dem zweiten Satz von Kontakten (214) zugeordnet ist.

7. Thermisch sensitive Steuer/Regeleinrichtung nach einem der vorhergehenden Ansprüche, wobei das Mittel, welches betätigbar ist (228), um den zweiten Satz von Kontakten (214) auf ein Anheben des Gefäßes hin zu öffnen, elastisch vorgespannt ist.

8. Thermisch sensitive Steuer/Regeleinrichtung nach Anspruch 7, wobei das Mittel eine Feder (228) umfasst, welche auf ein Anheben des Gefäßes hin gelöst wird.

9. Thermisch sensitive Steuer/Regeleinrichtung nach Anspruch 8, wobei die Feder (228) mit einem Element (224) gekoppelt ist, welches derart von dem Gefäß weg verläuft, dass es erneut gespannt wird, wenn das Gefäß auf die Trägerfläche gestellt wird und dann gelöst wird, wenn es von dieser aus angehoben wird.

10. Thermisch sensitive Steuer/Regeleinrichtung nach einem der vorhergehenden Ansprüche, wobei die Steuer/Regeleinrichtung ein Klinkenmittel (240) umfasst, welches den zweiten Satz von Kontakten (214) offen hält, nachdem das Gefäß von seiner Trägerfläche angehoben wurde.

11. Thermisch sensitive Steuer/Regeleinrichtung nach Anspruch 10, wobei das Klinkenmittel (240) durch das Steuer/Regelelement (204) gelöst wird, wenn es zu seiner "Ein"-Position zurückbewegt wird, sodass es ein erneutes Schließen des zweiten Satzes von Kontakten (214) ermöglicht.

12. Thermisch sensitive Steuer/Regeleinrichtung nach Anspruch 11, wobei das Klinkenmittel ein Klinkenelement (240) umfasst, welches in seine Einklink-Position bewegt wird, wenn das Gefäß von seinem Trägerftächenkörper angehoben wird.

13. Thermisch sensitive Steuer/Regeleinrichtung nach Anspruch 12, wenn direkt oder indirekt von Anspruch 8 oder 9 abhängig, wobei die Klinke (240) durch das Federmittel (228) derart bewegt wird.

14. Thermisch sensitive Steuer/Regeleinrichtung nach Anspruch 12 oder 13, wobei das Klinkenelement (240) für eine Schwenkbewegung zum Ausklinken angebracht ist.

15. Thermisch sensitive Steuer/Regeleinrichtung nach Anspruch 14, wobei das Klinkenelement (240) im Allgemeinen L-förmig ist, mit einer auf einem Schenkel vorgesehenen Verriegelung (252), und wobei das Löseelement auf den anderen Schenkel derart wirkt, dass es die Verriegelung von seiner Verriegelungsfläche weg schwenkt, um sie zu lösen.

16. Thermisch sensitive Steuer/Regeleinrichtung nach Anspruch 14 oder 15, wobei das Klinkenelement (240) ebenso für eine Translations-Bewegung angebracht ist.

17. Thermisch sensitive Steuer/Regeleinrichtung nach Anspruch 16, wobei das Klinkenelement (240) einen Schlitz (242) für einen Schiebeeingriff mit einer Anbringungsstelle (244) auf der Steuer/Regeleinrichtung umfasst.

18. Thermisch sensitive Steuer/Regeleinrichtung nach Anspruch 4 oder 5, wobei das Steuer/Regelelement (204) zwischen einer ersten Steuer/Regelposition, in welcher das erste Heizmittel mit Strom versorgt wird, einer zweiten Steuer/Regelposition, in welcher das zweite Heizmittel mit Strom versorgt wird und einer dritten Steuer/Regelposition beweglich ist, in welcher kein Heilmittel mit Strom versorgt wird, wobei das Steuer/Regetetement (204) von der ersten zu der zweiten Steuer/Regelposition in Erwiderung auf eine Betätigung des kochsensitiven Aktuators (232) bewegt wird; und wobei Haltemittel (258) vorgesehen sind, um das Steuer/Regelelement (204) in der zweiten Steuer/Regelposition zu halten, bis eine weitere Aktion unternommen wird, um das Steuer/Regelelement (204) zu der dritten Position zu bewegen.

19. Thermisch sensitive Steuer/Regeleinrichtung nach Anspruch 18, wobei das Anheben des Gefäßes die Haltemittel löst, um zu ermöglichen, dass sich das Steuer/Regetelement (204) in die dritte Steuer/Regelposition bewegt.

20. Thermisch sensitive Steuer/Regeleinrichtung nach Anspruch 19, wobei das Haltemittel einen Auslösestift umfasst, welcher auf einem Träger vorgesehen ist, der gebogen, insbesondere geschwenkt werden kann, um das Haltemittel zu lösen.

21. Thermisch sensitive Steuer/Regeleinrichtung nach einem der Ansprüche 18 bis 20, wobei das Haltemittel federvorgespannt ist, um ein Halten des Steuer/Regelelements (204) in der zweiten Position zu unterstützen.

22. Thermisch sensitive Steuer/Regeleinrichtung nach Anspruch 21, wobei die Federvorspannkraft durch eine Feder bereitgestellt ist, welche im Ansprechen auf ein Anheben des Gefäßes beweglich ist, um das Haltemittel zu lösen.

23. Thermisch sensitive Steuer/Regeleinrichtung nach einem beliebigen der Ansprüche 18 bis 22, wobei das Haltemittel derart konfiguriert und angeordnet ist, dass es in der Lage ist, durch einen Benutzer manuell gelöst zu werden, welcher das Steuer/Regelelement (204) zu der dritten Position bewegt.

24. Thermisch sensitive Steuer/Regeleinrichtung nach einem der vorhergehenden Ansprüche, wobei der koch-sensitive Aktuator (232) ein Bimetall-Aktuator ist, welcher auf eine Temperatur eines Teils des Gefäßes anspricht, vorzugsweise eines Sumpfes des Gefäßes.

25. Thermisch sensitive Steuer/Regeleinrichtung nach einem der Ansprüche 1 bis 23, wobei der kochsensitive Aktuator (232) ein dampf-sensitiver Bimetall-Aktuator ist.

26. Flüssigkeits-Helzgefäß, welches ein Heizelement und eine Steuer/Regeleinrichtung nach einem beliebigen vorhergehenden Anspruch umfasst.

27. Flüssigkeits-Heizgefäß nach Anspruch 26, wobei das Heizelement ein Dickfilm-Heizelement ist.

## Revendications

1. Commande thermosensible pour un récipient de chauffage de liquide ayant un premier moyen de chauffage destiné à chauffer le liquide dans le récipient et un second moyen de chauffage destiné à conserver le liquide chaud dans le récipient après qu'il a été chauffé, ladite commande comprenant: un capteur ou actionneur thermosensible (16; 232) ; un moyen sensible audit actionneur ou audit capteur (14 ; 204) pour ouvrir un premier ensemble de contacts (46 ; 212) afin de faire passer le chauffage du premier moyen de chauffage audit second moyen de chauffage; et **caractérisée en ce que** ladite commande comprend en outre des moyens (60 ; 228) actionnables lorsque le récipient est retiré d'une surface d'appui afin d'ouvrir un second ensemble de contacts (48 ; 214) de façon à fermer les deux moyens de chauffage, lesdits ensembles respectifs de contacts (46, 48 ; 212, 214) ne pouvant être refermés par la suite qu'en replaçant le récipient sur sa surface d'appui et réglant manuellement la commande sur sa position de « marche ».

2. Commande thermosensible selon la revendication 1, dans laquelle ledit capteur ou actionneur est un actionneur thermosensible (232) ; et ledit moyen sensible audit actionneur comprend un élément de commande actionnable manuellement (204) pouvant se déplacer à partir d'une position de « marche » en réponse à l'opération dudit actionneur (232) afin d'ouvrir ledit premier ensemble de contacts (212).

3. Commande thermosensible selon la revendication 2, dans laquelle ledit élément de commande actionnable manuellement est un levier de déclenchement (204) ; et ledit moyen actionnable lorsque le récipient est retiré d'une surface d'appui est un moyen à ressort (228) ; ladite commande comprenant en outre un moyen de verrouillage (240) destiné à maintenir ledit second ensemble de contacts (214) ouvert après que ledit récipient a été remplacé sur sa surface d'appui : ledit levier de déclenchement (204) étant configuré de façon à relâcher le verrouillage (240) afin de permettre audit second ensemble de contacts (214) de se fermer lorsqu'il est retourné manuellement en position de « marche ».

4. Commande thermasensible selon la revendication 2 ou 3 pour un récipiont d'ébullition de liquide dans laquelle : ledit premier moyen de chauffage est destiné à faire bouillir le liquide dans le récipient ; ledit second moyen de chauffage est destiné à maintenir l'ébullition ou à conserver le liquide chaud dans le récipient après l'avoir fait bouillir ; et dans laquelle ledit actionneur thermosensible est un actionneur sensible à l'ébullition (232).

5. Commande thermosensible selon la revendication 4, dans laquelle ledit élément de commande est un levier de déclenchement (204).

6. Commande thermosensible selon la revendication 5, dans laquelle ledit levier de déclenchement (204) comprend deux bras (216, 218), dont le premier agit pour ouvrir le premier ensemble de contacts (212) en réponse à l'ébullition du liquide dans le récipient et dont le second est associé au second ensemble de contacts (214).

7. Commande thermosensible selon l'une quelconque des revendications précédentes, dans laquelle ledit moyen actionnable (228) pour ouvrir le second ensemble de contacts (214) au moment où le récipient est soulevé est contraint initialement de façon élastique.

8. Commande thermosensible selon la revendication 7, dans laquelle ledit moyen comprend un ressort (228) qui est relâché lorsque le récipient est soulevé.

9. Commande thermosensible selon la revendication 8, dans laquelle ledit ressort (228) est couplé à un élément (224) qui s'étend à partir du récipient de façon à se recharger lorsque le récipient est placé sur la surface d'appui et ensuite se relâcher lorsqu'il est soulevé à partir de là.

10. Commande thermosensible selon l'une quelconque des revendications précédentes, dans laquelle la commande comprend le moyen de verrouillage (240) qui retient le second ensemble de contacts (214) ouvert après que le récipient a été retiré de sa surface d'appui.

11. Commande thermosensible selon la revendication 10, dans laquelle ledit moyen de verrouillage (240) est relâché par l'élément de commande (204) lorsqu'il retourne en position de « marche », de façon à permettre la refermeture du second ensemble de contacts (214).

12. Commande thermosensible selon la revendication 11, dans laquelle ledit moyen de verrouillage comprend un élément de verrouillage (240) qui pesse en position de verrouillage lorsque le récipient est soulevé à partir de son corps de surface d'appui.

13. Commande thermosensible selon la revendication 12 comme dépendant directement ou indirectement de la revendication 8 ou 9, dans laquelle ledit verrouillage (240) est ainsi déplacé par ledit moyen à ressort (228).

14. Commande thermosensible selon la revendication 12 ou 13, dans laquelle l'élément de verrouillage (240) est monté pour un mouvement pivotant destiné au déverrouillage.

15. Commande thermosensible selon la revendication 14, dans laquelle l'élément de varrouillage (240) est généralement et L, avec un encliquetage (252) prévu sur une blanche, et l'élément déclencheur agissant sur l'autre branche pour faire pivoter l'encliquetage à distance de sa surface de prise afin de le relâcher.

16. Commande thermosensible selon la revendication 14 ou 15, dans laquelle l'élément de verrouillage (240) est égalemeat monté pour un mouvement de translation.

17. Commande thermosensible selon la revendication 16, dans laquelle l'élément de verrouillage (240) comprend une encoche (242) destiné à un engrènement coulissant avec un emplacement de montage (244) sur la commande.

18. Commande thermosensible selon la revendication 4 ou 5, dans laquelle ledit élément de commande (204) peut se déplacer entre une première position de commande, dans laquelle ledit premier moyen de chauffage est alimenté, une deuxième position de commande, dans laquelle ledit second moyen de chauffage est alimenté, et une troisième position de commande, dans laquelle aucun des deux moyens de chauffage n'est alimenté, ledit élément de commande (204) passant de ladite première à ladite deuxième position de commande en réponse à l'opération dudit actionneur sensible à l'ébullition (232) ; et dans laquelle le moyen de retenue (258) est prévu pour retenir ledit élément de commande (204) à ladite deuxième position de commande jusqu'à ce qu'une autre action soit prise pour faire passer ledit élément de commande (204) à ladite troisième position de commande.

19. Commande thermosensible selon la revendication 18, dans laquelle le fait de retirer le récipient relâche le moyen de retenue afin de permettre à l'élément de commande (204) de passer à la troisième position de commande.

20. Commande thermosensible selon la revendication 19, dans laquelle le moyen de retenue comprend un cliquet prévu sur un support qui peut être dévié, plus particulièrement déplacé afin de relâcher le moyen de retenue.

21. Commande thermosensible selon l'une quelconque des revendications 18 à 20, dans laquelle le moyen de retenue est contraint initialement par ressort afin d'assister la conservation de l'élément de commande (204) à la deuxième position.

22. Commande thermosensible selon la revendication 21, dans laquelle la force de contrainte initialement par ressort est prévue par un ressort qui peut sa déplacer en réaction su retrait du récipient de façon à relâcher le moyen de retenue.

23. Commande thermosensible selon l'une quelconque des revendications 18 à 22, dans laquelle le moyen de retenue est configuré et disposé de façon à pouvoir être relâché manuellement par un utilisateur faisant passer l'élément de commande (204) à la troisième position.

24. Commande thermosensible selon l'une quelconque des revendications précédentes, dans laquelle l'actionneur sensible à l'ébullition (232) est un actionneur bilame sensible à une température d'une partie du récipient, de préférence un collecteur du récipient.

25. Commande thermosensible selon l'une quelconque des revendications 1 à 23, dans laquelle l'actionneur sensible à l'ébullition (232) est un actionneur bilame sensible à la vapeur d'eau.

26. Récipient de chauffage de liquide comprend un élément thermique et une commande selon l'une quelconque des revendications précédentes.

27. Récipient de chauffage de liquide selon la revendication 26, dans lequel ledit élément thermique est un élément thermique à couche épaisse.
